# EUROPEAN PATENT APPLICATION

(11) **EP 4 787 508 A1**
(43) Date of publication of application: **05.08.2026**
(21) Application number: 24878555.2
(22) Date of filing: 01.07.2024
(51) Int. Cl.: H01M 8/18

(54) **PURIFICATION APPARATUS AND PURIFICATION METHOD FOR IRON-CHROMIUM ELECTROLYTE OF FLOW BATTERY**

(30) Priority: 17.10.2023 CN 202311341704
(71) Applicant: Jiangsu Longvault Energy Technology Co., Ltd., Suzhou, Jiangsu 215237 (CN)
(72) Inventor: MA, Zhiqi, Shanghai 201600 (CN); WANG, Bingfu, Shanghai 201600 (CN)
(74) Representative: Sun, Yiming
(86) International application number: PCT/CN2024/102873
(87) International publication number: WO 2025/081902

(57) **Abstract**

Disclosed in the present invention are a purification apparatus and purification method for an iron-chromium electrolyte of a flow battery. The purification apparatus is an electrolytic cell, which includes one electrolytic unit or is formed by means of overlaying a plurality of electrolytic units, and the structure of the electrolytic cell is similar to that of an iron-chromium flow battery stack. The purification method comprises: dividing a crude electrolyte into a positive-electrode-cavity electrolyte and a negative-electrode-cavity electrolyte, which simultaneously flow through a positive electrode and a negative electrode, respectively, from inlet ends of electrolytic units; applying an external current; and controlling a charging potential of each electrolytic unit to be not higher than a unit open-circuit voltage of an iron-chromium flow battery, wherein impurity ions are deposited on the surface of the negative electrode. After a certain cycle operation time, the flow resistance inside the negative electrode is significantly increased, and the steps of flushing and discharging can be then performed, such that the flow resistance inside the negative electrode is substantially recovered. In the present invention, an electrolytic cell similar to a battery stack is used, and an electrolyte can be purified by means of switching charging and discharging operations under certain voltage and resistance conditions, thereby achieving convenient operations and good purification effects.

## Description

### TECHNICAL FIELD

The present disclosure belongs to the technical field of batteries, and particularly relates to a purification apparatus and purification method for an iron-chromium electrolyte of a flow battery.

### BACKGROUND

An electrochemical flow battery is a new type of large-sized electrochemical energy storage apparatus with power and capacity designable independently. Especially, an aqueous flow battery has the advantages such as high safety, high power, large capacity, good stability, long service life, and wide application fields. A flow battery energy storage apparatus (or system, or power station) is mainly composed of a battery stack, an electrolyte delivery system, an electrolyte storage tank, an energy storage converter, and other parts. In a charging process of the system, electric energy is converted into chemical energy through the battery stack, which serves as a core device of the system, and the chemical energy is stored in an electrolyte of the system. Thus, in a flow battery system, the electrolyte is an important part for electric energy storage. The component stability, impurity content and life span of the electrolyte have great influence on a capacity of the entire battery system.

In practical production and application, the electrolyte is mostly of the analytical grade, and is prepared from an analytical-grade chemical raw material reagent. Its price is high, leading to high cost of an electrochemical flow battery. In order to reduce the cost, it is expected to reduce a grade of the chemical raw material reagent of the electrolyte to the industrial grade, and thereby prepare an industrial-grade electrolyte at first. Or, impurities are introduced into an analytical-grade electrolyte due to improper operation during use, which reduces a reagent grade of the electrolyte to the industrial grade. However, the industrial-grade electrolyte contains many impurities, for example, one or more of metal ions such as Zn, Cu, Mn, As, Co, Ni, Sn, and Mo, and may contain one or more of other noble metal ions such as Pt, Pd, and Ag. The impurities may affect the use of the electrolyte, leading to rapid failure of the electrolyte or other side effects of the energy storage system. In addition to preparing an analytical-grade electrode solution from an analytical-grade reagent, research on a purification method for an industrial-grade electrolyte is still in its infancy, with few related reports. The patents CN113564680B and CN110858655A disclosed a purification method and apparatus for an iron-chromium electrolyte, respectively. However, because the toxic substance, metallic mercury, is used in the method, obviously serious problems of health and the environment are caused, and the method is not suitable for large-scale industrial production.

In order to solve the above problems in the prior art, the present disclosure is provided.

### SUMMARY

In view of the defects of the existing electrolyte purification technologies, the present disclosure provides a purification apparatus and purification method for an iron-chromium electrolyte of a flow battery.

In the technical solution of the present disclosure:
The present disclosure relates to the purification apparatus for an iron-chromium electrolyte of a flow battery. The purification apparatus is an electrolytic cell including one electrolytic unit or formed by superposing a plurality of electrolytic units. The electrolytic unit consists of a current collecting plate, a positive electrode, an ion exchange membrane, a negative electrode, and a current collecting plate that are sequentially arranged. The positive electrode and the negative electrode are separated from each other by the ion exchange membrane. The positive electrode and the negative electrode are provided with pores to allow the electrolyte to pass.

The current collecting plates arranged at two ends are labeled as a positive electrode current collecting end plate and a negative electrode current collecting end plate, respectively, when the plurality of electrolytic units are arranged, except for the positive electrode current collecting end plate and the negative electrode current collecting end plate arranged at the two ends, two internal adjacent ones of the electrolytic units share the current collecting plate, and the shared current collecting plate is labeled as a bipolar plate.

Preferably, the positive electrode and the negative electrode are made of a porous graphite material.

Preferably, the porous graphite material is porous graphite felt, and a thickness of the porous graphite felt of the negative electrode is greater than or equal to a thickness of the porous graphite felt of the positive electrode. In a case of a small treatment capacity, the positive electrode and the negative electrode may be made of a porous graphite material having a consistent thickness. In a case of a great treatment capacity, the negative electrode may be made of a thicker porous graphite material.

Preferably, a sealing structure is arranged to avoid leakage of the electrolytic cell.

Preferably, the plurality of electrolytic units are arranged, and the plurality of electrolytic units are closely superposed to form a structure in which circuits are connected in series and flow paths are connected in parallel.

Preferably, the negative electrode current collecting end plate and/or the bipolar plate are provided with flow channels, and the flow channel on the bipolar plate is provided at one side closer to the negative electrode. The low fluid resistance design is conducive to reduction in fluid resistance and increase in impurity treatment capacity.

The present disclosure further relates to a purification method for an iron-chromium electrolyte of a flow battery. The purification method uses the above purification apparatus. The purification method includes the following step:
S1, performing charging and purifying: dividing a crude electrolyte into a positive electrode cavity electrolyte and a negative electrode cavity electrolyte to flow through a positive electrode and a negative electrode simultaneously from an inlet end of an electrolytic unit, respectively, applying external currents, controlling a charging potential of each electrolytic unit to be not higher than an open-circuit voltage of an iron-chromium flow battery, where the open-circuit voltage is slightly lower than a standard equilibrium potential of 1.18 V of a redox reaction of the iron-chromium flow battery, and causing impurity ions that are easier to reduce than chromium ions to be deposited on a surface of the negative electrode.

When the purification apparatus is stationary and no charge and discharge currents are applied, the electrolytes flowing through the positive electrode and the negative electrode may be completely the same. When charging and impurity ion removal are started, the charging potential of each electrolytic unit is controlled to be not higher than the open-circuit voltage, and only impurities influencing the redox reaction of the iron-chromium flow battery are removed. That is, on an electrode at a negative electrode side, impurity ions that are easier to reduce than chromium ions may be deposited on a surface of the electrode, and the other impurity ions cannot have a reduction reaction. Meanwhile, if impurities that are easier to oxidize are attached to an upper surface of the positive electrode, the oxidized impurities may enter fluid and be taken away, and the surface of the positive electrode may be purified to a certain extent, which is conducive to reduction in a charging polarization degree of the positive electrode and improvement in electrolytic efficiency.

Preferably, at an outlet end of the electrolytic unit, the electrolyte flowing from the positive electrode and the electrolyte flowing from the negative electrode are mixed, and then are introduced into the electrolytic unit for cyclic treatment. The electrolyte may be mixed in a storage tank. Thus, through continuous cyclic operations, as many impurity ions as possible can be continuously deposited and collected on the surface of the negative electrode, and a total concentration of purified impurity metal ions can be reduced to 3 µM or below.

Preferably, the purification method further includes the following step:
S2, performing washing: in a case that too many impurities are accumulated on the surface of the negative electrode after a certain cyclic operation period and flow resistance in the negative electrode is increased significantly, stopping applying currents when the flow resistance in the negative electrode is 1.5 or more times initial flow resistance or an inlet-outlet pressure difference is 1.5 or more times an initial inlet-outlet pressure difference (on the premise that a maximum negative electrode inlet-outlet pressure difference and an electrolytic cell withstand voltage are designed and breaking of the membrane between the positive electrode and the negative electrode under an allowable pressure difference between the negative electrode and the positive electrode is avoided), switching original electrolyte inlet and outlet pipes at the positive electrode and the negative electrode to washing liquid, and washing the negative electrode with the washing liquid. The washing liquid is similar to the electrolyte, and is only used to wash reactive impurities, for example, metals such as Zn, Cu, and Sn, deposited on the surface of the negative electrode.

Preferably, the purification method further includes the following step:
S3, performing discharging: applying external currents to remove impurities from a surface of an electrode, and washing away the impurities with the washing liquid, wherein when the flow resistance in the negative electrode is reduced to 1.1 or less times the initial flow resistance, it is determined that the impurities are removed completely. When impurities, such as Mn, As, Co, Ni, Mo, and noble metals, difficult to react in the above S2 are difficult to wash away, the external currents are applied to cause the electrolytic cell to discharge with controllable small currents, so as to strengthen removal of impurities on the surface of the electrode. When the flow resistance in the negative electrode is reduced to 1.1 or less times the initial flow resistance, it is determined that the impurities are removed completely. In this case, S1 may be performed again. Washing liquid inlet and outlet pipes at the positive electrode and negative electrode are switched to an original electrolyte, and charging and purification operations are performed again.

In the present disclosure, charging is a process of removing impurities from the electrolyte. Influential metal ions in the electrolyte are reduced and deposited on the negative electrode, and then switch to use the washing liquid is performed. In addition, discharging is performed to cause the metal impurities to be removed from the negative electrode and taken away by the washing liquid. In this way, the negative electrode is restored to an initial state, and deposition may be performed again.

Preferably, impurity metal ions in the crude electrolyte include metal ions and noble metal ions. The metal ions include one or more of Zn, Cu, Mn, As, Co, Ni, Sn, and Mo. The noble metal ions include one or more of Pt, Pd, and Ag.

The present disclosure has the beneficial effects:
According to the present disclosure, a structure similar to an iron-chromium flow battery stack is used as an electrolytic cell structure of the purification apparatus, a purification process using the purification apparatus is simple and feasible, and even can be operated online to facilitate treatment of impurities introduced into an internal pipe wall, an internal device wall, a stack, and other parts of a flow battery system, and no toxic substances are needed. The present disclosure uses the electrolytic cell similar to a battery stack to operate, and can implement purification of the electrolyte by switching charging and discharging operations under certain voltage and resistance conditions. A total concentration of the purified impurity metal ions can reach an ideal effect of 3 µM or below.

### BRIEF DESCRIPTION OF THE DRAWINGS

The present disclosure will be further described below in conjunction with drawings and embodiments:
FIG. 1 is a schematic structural diagram of a purification apparatus with one electrolytic unit;
FIG. 2 is a schematic structural diagram of another purification apparatus with one electrolytic unit, with a flow channel provided in a negative electrode current collecting end plate; and
FIG. 3 is a schematic structural diagram of a purification apparatus with a plurality of electrolytic units.

Description of reference numbers in the figures: 1, positive electrode; 2, negative electrode; 3, ion exchange membrane; 4, positive electrode current collecting end plate; 5, negative electrode current collecting end plate; 6, flow channel; and 7, bipolar plate.

### DETAILED DESCRIPTION

To make the objectives, technical solutions and advantages of the present disclosure clearer, the present disclosure will be further described in detail below in conjunction with specific implementations with reference to accompanying drawings. It should be understood that the description is merely illustrative, and is not intended to limit the scope of the present disclosure. Further, the description of well-known structures and technologies is omitted in the following description, such that concepts of the present disclosure are prevented from being unnecessarily confused.

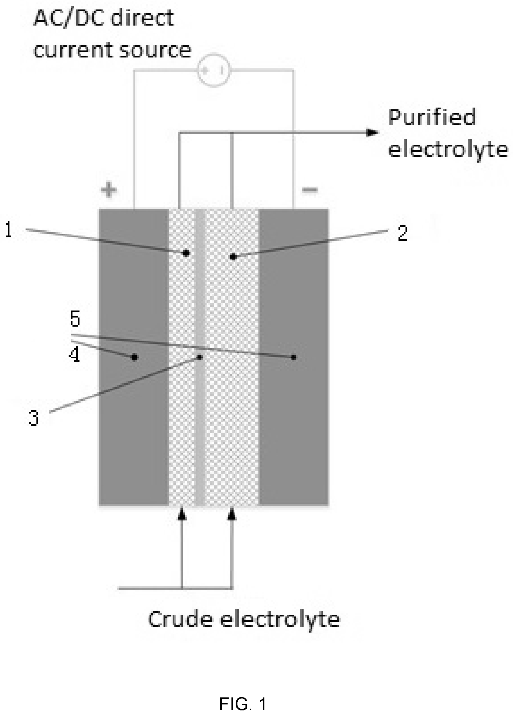

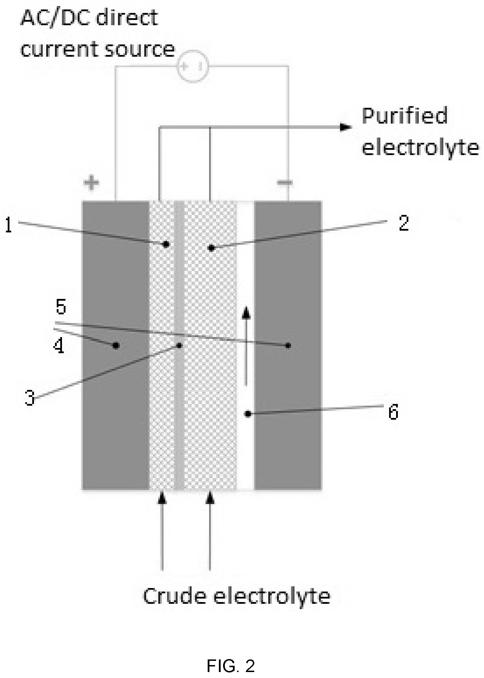

As shown in FIG. 1, a purification apparatus for an iron-chromium electrolyte of a flow battery includes one electrolytic unit. The electrolytic unit includes two plate-type current collecting plates that are labeled as a positive electrode current collecting end plate and a negative electrode current collecting end plate, respectively. A positive electrode, an ion exchange membrane and a negative electrode are sequentially arranged between the two current collecting plates, and the positive electrode and the negative electrode are separated from each other by the ion exchange membrane. The positive electrode and the negative electrode are made of porous graphite felt. The porous graphite felt of the positive electrode and the porous graphite felt of the negative electrode are provided with certain pores, with a porosity not less than 80%, so as to allow the electrolyte to pass. In another preferred embodiment, as shown in FIG. 2, the purification apparatus is different from the purification apparatus in FIG. 1 in that the negative electrode current collecting end plate is provided with a flow channel, which is conducive to reduction in fluid resistance and improvement in impurity treatment capacity.

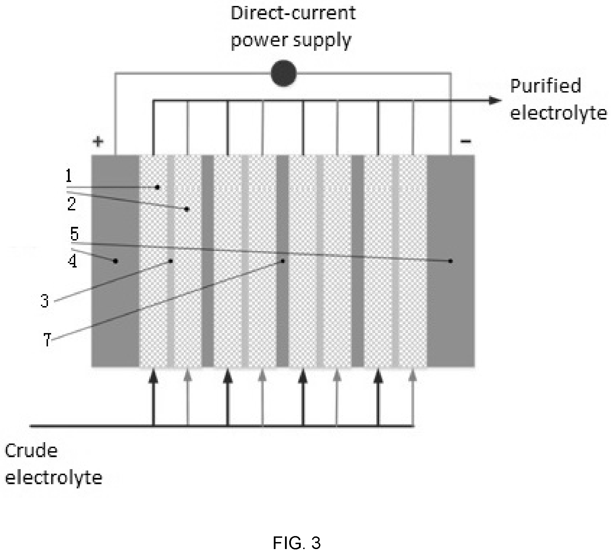

As shown in FIG. 3, in another embodiment, an electrolytic cell is formed by closely superposing a plurality of electrolytic units, and a sealing structure is arranged to avoid leakage of the electrolytic cell. Except for the electrolytic units at two ends, two internal adjacent ones of the electrolytic units share the current collecting plate, which is called a bipolar plate. The electrolytic unit may be a structure without a flow channel as shown in FIG. 1, or a structure with a flow channel provided in the negative electrode current collecting end plate or the bipolar plate as shown in FIG. 2.

In addition, some other auxiliary devices need to be provided for the process, and include pumps, pipe fittings and valves, storage tanks, and other devices, as well as possible automatic control strategies and procedures.

### Embodiment 1

As shown in FIG. 1, an electrolytic cell with only one electrolytic unit was used for the purification apparatus for an iron-chromium electrolyte of a flow battery. An effective area of the electrolytic cell was 50 cm². The positive electrode and the negative electrode were made of a graphite felt material having a thickness of 6 mm and an area of 71 mm×71 mm. Plate-type graphite current collecting plates having a thickness of 1 mm and a porosity of 90% or above were used. A middle membrane was made of a perfluorosulfonic acid membrane having a thickness of 125 µm to 180 µm.

The electrolytic cell was used to treat about 1000 mL of crude electrolyte prepared in a laboratory, concentrations of active substances Fe²⁺ and Cr³⁺ were 1 M to 2 M, respectively, and a concentration of hydrochloric acid was 3 M. Impurities influencing operations of an iron-chromium flow battery in the electrolyte were analyzed as metal ions, before purification, detected in the following Table 1. The electrolyte was circularly input into the electrolytic cell through a circulating pump, with a flow rate of about 100 ml/min to 200 ml/min. After charging currents of about 10 mA/cm² were applied and charging was performed for about 10 min, an impurity content of the purified electrolyte was analyzed as the content in the following table, and a total impurity content could be reduced to about 2.8 µM.

**Table 1**

| Item | Impurity content before purification | | Impurity content after purification | |
|---|---|---|---|---|
| | (mg/L) | (mM) | (mg/L) | (µM) |
| Zinc (Zn) ≤ | 2.4 | 0.036 | 0.004 | 0.061 |
| Copper (Cu) ≤ | 7.2 | 0.113 | 0.012 | 0.188 |
| Manganese (Mn) ≤ | 71.6 | 1.303 | 0.119 | 2.171 |
| Arsenic (As) ≤ | 7.2 | 0.096 | 0.012 | 0.159 |
| Lead (Pb) ≤ | 7.2 | 0.035 | 0.012 | 0.058 |
| Cobalt (Co) ≤ | 2.4 | 0.040 | 0.004 | 0.067 |
| Nickel (Ni) ≤ | 2.4 | 0.041 | 0.004 | 0.068 |
| Tin (Sn) ≤ | 0.1 | 0.001 | 0.0002 | 0.002 |
| In total ≤ | 100.4 | 1.7 | 0.2 | 2.77 |

### Embodiment 2

As shown in FIG. 3, an electrolytic cell including 50 electrolytic units was used for the purification apparatus for an iron-chromium electrolyte of a flow battery, with an effective area of 800 cm². A plate-type graphite current collecting plate having a thickness of 1 mm was used as a positive electrode of a first electrolytic unit at an outermost end, and a current collecting plate having a thickness of 2 mm and having a flow channel (with a depth × width of the flow channel being 1 mm × 2 mm, and an interval of 2 mm) was used as a negative electrode of a 50th electrolytic unit at an outermost end. Current collecting plates having a thickness of 2 mm and having flow channels were used as all internal bipolar plates, and the flow channels were provided at negative electrode sides. The positive electrode and the negative electrode were still made of a graphite felt material having a thickness of 6 mm, an area of 200 mm × 400 mm, and a porosity of 90% or above. A middle membrane was made of a perfluorosulfonic acid membrane having a thickness of 125 µm to 180 µm.

The electrolytic cell was used to treat about 1 m³ of crude electrolyte prepared in small-scale production, concentrations of active substances Fe²⁺ and Cr³⁺ were 1 M to 2 M, respectively, and a concentration of hydrochloric acid was 2 M to 3 M. Impurities influencing operations of an iron-chromium flow battery in the electrolyte were analyzed as metal ions, before purification, detected in the following Table 2. The electrolyte was circularly input into the electrolytic cell through a circulating pump, with a flow rate of about 80 L/min to 160 L/min. After charging currents of about 10 mA/cm² were applied and charging was performed for about 30 min, an impurity content of the purified electrolyte was analyzed as the content in the following table, and a total impurity content could be reduced to about 2.5 µM.

**Table 2**

| Item | Impurity content before purification | | Impurity content after purification | |
|---|---|---|---|---|
| | (mg/L) | (mM) | (mg/L) | (µM) |
| Zinc (Zn) ≤ | 13.0 | 0.199 | 0.009 | 0.133 |
| Copper (Cu) ≤ | 3.0 | 0.047 | 0.002 | 0.031 |
| Manganese (Mn) ≤ | 180.0 | 3.276 | 0.120 | 2.184 |
| Cobalt (Co) ≤ | 3.0 | 0.051 | 0.002 | 0.034 |
| Nickel (Ni) ≤ | 4.0 | 0.068 | 0.003 | 0.045 |
| Tin (Sn) ≤ | 5.0 | 0.042 | 0.003 | 0.028 |
| Magnesium (Mg) ≤ | 20.0 | 0.823 | 0.013 | 0.549 |
| Molybdenum (Mo) ≤ | 8.0 | 0.083 | 0.005 | 0.056 |
| In total ≤ | 208.0 | 3.7 | 0.1 | 2.46 |

In a case that too many impurities were accumulated on the surface of the negative electrode after a certain cyclic operation period and flow resistance in the negative electrode was increased significantly, when the flow resistance in the negative electrode was 1.5 or more times initial flow resistance or an inlet-outlet pressure difference was 1.5 or more times an initial inlet-outlet pressure difference (on the premise that a maximum negative electrode inlet-outlet pressure difference and an electrolytic cell withstand voltage were designed and breaking of the membrane between the positive electrode and the negative electrode under an allowable pressure difference between the negative electrode and the positive electrode was avoided), current application was stopped, original electrolyte inlet and outlet pipes at the positive electrode and the negative electrode were switched to washing liquid, and the negative electrode was washed with the washing liquid. The washing liquid was similar to the electrolyte, and was only used to wash reactive impurities, for example, metals such as Zn, Cu, and Sn, deposited on the surface of the negative electrode. Then, external currents were applied to remove impurities from a surface of an electrode, and the impurities were washed away by the washing liquid. When the flow resistance in the negative electrode was reduced to 1.1 or less times the initial flow resistance, it was determined that the impurities were removed completely.

After the electrolytic cell was washed and subjected to discharge-enhanced washing, a next purification operation could be continued. In this way, a batch purification process could be formed, and become an important link in a process of producing the electrolyte.

It should be understood that the above specific implementations of the present disclosure are merely used to illustrate or explain principles of the present disclosure, and do not limit the present disclosure. Thus, any modification, equivalent substitution, improvement, etc. made without departing from the spirit and scope of the present disclosure should fall within the protection scope of the present disclosure. In addition, the append claims of the present disclosure are intended to cover all changes and modifications falling within the scope and boundary of the appended claims, or equivalents of the scope and boundary.

## Claims

1. A purification apparatus for an iron-chromium electrolyte of a flow battery, **characterized in that** the purification apparatus is an electrolytic cell comprising one electrolytic unit or formed by superposing a plurality of electrolytic units, the electrolytic unit consists of a current collecting plate, a positive electrode, an ion exchange membrane, a negative electrode, and a current collecting plate that are sequentially arranged, the positive electrode and the negative electrode are separated from each other by the ion exchange membrane, and the positive electrode and the negative electrode are provided with pores to allow the electrolyte to pass; and;
the current collecting plates arranged at two ends are labeled as a positive electrode current collecting end plate and a negative electrode current collecting end plate, respectively, when the plurality of electrolytic units are arranged, except for the positive electrode current collecting end plate and the negative electrode current collecting end plate arranged at the two ends, two internal adjacent ones of the electrolytic units share the current collecting plate, and the shared current collecting plate is labeled as a bipolar plate.

2. The purification apparatus for an iron-chromium electrolyte of a flow battery according to claim 1, **characterized in that** the positive electrode and the negative electrode are made of a porous graphite material.

3. The purification apparatus for an iron-chromium electrolyte of a flow battery according to claim 2, **characterized in that** the porous graphite material is porous graphite felt, and a thickness of the porous graphite felt of the negative electrode is greater than or equal to a thickness of the porous graphite felt of the positive electrode.

4. The purification apparatus for an iron-chromium electrolyte of a flow battery according to claim 1, **characterized in that** the plurality of electrolytic units are arranged, and the plurality of electrolytic units are closely superposed to form a structure in which circuits are connected in series and flow paths are connected in parallel.

5. The purification apparatus for an iron-chromium electrolyte of a flow battery according to claim 1, **characterized in that** the negative electrode current collecting end plate and/or the bipolar plate are provided with flow channels, and the flow channel on the bipolar plate is provided at one side closer to the negative electrode.

6. A purification method for an iron-chromium electrolyte of a flow battery, **characterized by** using the purification apparatus for an iron-chromium electrolyte of a flow battery according to any one of claims 1 to 5, comprising the following step:
S1, performing charging and purifying: dividing a crude electrolyte into a positive electrode cavity electrolyte and a negative electrode cavity electrolyte to flow through a positive electrode and a negative electrode simultaneously from an inlet end of an electrolytic unit, respectively, applying external currents, controlling a charging potential of each electrolytic unit to be not higher than an open-circuit voltage of an iron-chromium flow battery, wherein the open-circuit voltage ≤ a standard equilibrium potential of 1.18 V of the iron-chromium flow battery, and causing impurity ions that are easier to reduce than chromium ions to be deposited on a surface of the negative electrode.

7. The purification method for an iron-chromium electrolyte of a flow battery according to claim 6, **characterized in that** at an outlet end of the electrolytic unit, the electrolyte flowing from the positive electrode and the electrolyte flowing from the negative electrode are mixed, and then are introduced into the electrolytic unit for cyclic treatment.

8. The purification method for an iron-chromium electrolyte of a flow battery according to claim 6, **characterized by** further comprising the following step:
S2, performing washing: stopping applying currents when flow resistance in the negative electrode is 1.5 or more times initial flow resistance or an inlet-outlet pressure difference is 1.5 or more times an initial inlet-outlet pressure difference, and washing the negative electrode with washing liquid.

9. The purification method for an iron-chromium electrolyte of a flow battery according to claim 7, **characterized by** further comprising the following step:
S3, performing discharging: applying external currents to remove impurities from a surface of an electrode, and washing away the impurities with the washing liquid, wherein when the flow resistance in the negative electrode is reduced to 1.1 or less times the initial flow resistance, it is determined that the impurities are removed completely.

10. The purification method for an iron-chromium electrolyte of a flow battery according to claim 7, **characterized in that** impurity metal ions in the crude electrolyte comprise metal ions and noble metal ions, the metal ions comprise one or more of Zn, Cu, Mn, As, Co, Ni, Sn, and Mo, and the noble metal ions comprise one or more of Pt, Pd, and Ag.
